(19) Europäisches Patentamt
European Patent Office
Office européen des brevets

(11) **EP 3 833 828 B1**

(12) **EUROPEAN PATENT SPECIFICATION**

(45) Date of publication and mention of the grant of the patent:
**12.07.2023 Bulletin 2023/28**

(21) Application number: **19769241.1**

(22) Date of filing: **08.08.2019**

(51) International Patent Classification (IPC):
**H02J 50/10** *(2016.01)*    **E04C 2/26** *(2006.01)*

(52) Cooperative Patent Classification (CPC):
**H02J 50/10;** E04C 2/26

(86) International application number:
**PCT/IB2019/056750**

(87) International publication number:
**WO 2020/031124 (13.02.2020 Gazette 2020/07)**

(54) **COVERING PANEL AND FASTENING SYSTEM COMPRISING SAID PANEL, PROCESS FOR FASTENING**

VERKLEIDUNGSPLATTE UND BEFESTIGUNGSSYSTEM MIT DIESER PLATTE, VERFAHREN ZUR BEFESTIGUNG

PANNEAU DE REVÊTEMENT ET SYSTÈME DE FIXATION COMPRENANT LEDIT PANNEAU, PROCÉDÉ DE FIXATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2018 IT 201800007975**

(43) Date of publication of application:
**16.06.2021 Bulletin 2021/24**

(73) Proprietor: LYM S.r.l.
**33077 Sacile (PN) (IT)**

(72) Inventors:
• **DEPLANO, Davide**
  **31016 CORDIGNANO (TV) (IT)**
• **CARLET, Andrea**
  **31016 CORDIGNANO (TV) (IT)**

(74) Representative: **Frare, Paolo et al**
  **Barzanò & Zanardo Milano S.p.A.**
  **Via Borgonuovo 10**
  **20121 Milano (IT)**

(56) References cited:
WO-A1-2013/024388    WO-A1-2015/153812
WO-A1-2018/025230    JP-A- 2009 159 675
US-A1- 2010 219 693

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention concerns a covering panel for covering for example parts of pre-existing buildings or making new ones, like for example partitions, a fastening system of electrical and electronic equipment that uses such a panel, an electrical or electronic device suitable for being fixed to such a covering panel and a method for fastening electrical or electronic equipment to such panels.

With such covering panels and such a fastening system it is possible to reversibly fasten electrical or electronic devices, for example to walls or ceilings, powering them with more freedom and safety with respect to current fastening and energy transfer systems.

### State of the art

From publication WO2018/025230A1 a lighting system is currently known comprising one or more lamps capable of moving autonomously on plasterboard panels that cover, for example, the walls or the ceiling of a room.

Such lamps adhere to the plasterboard panels thanks to the attraction between magnets, mounted onboard the self-moving lamps, and one or more layers of ferromagnetic material contained in the plasterboard panels.

The plasterboard covering panels described in document WO2018/025230A1 can be provided with inductive wireless chargers hidden inside or behind the covering panels themselves, allowing the self-moving lamps to be charged or powered, simply fixed magnetically to the walls covered by said panels.

It is thus possible to make rooms equipped with many completely invisible charging points, having a very elegant, minimalist and basic appearance; although very rich in services and convenience.

Since they are completely hidden in the plasterboard panels, the chargers are also totally unreachable, for example by children, and therefore are much safer than conventional plug sockets with visible holes.

However, it is necessary to indicate the position of the various chargers, to allow users to magnetically fasten the various devices to be powered at the correct point of a wall.

Simply indicating the areas of the panels, sufficiently close to the windings of the inductors, with colours or marks (drawn or painted on the applied and finished panels, or printed on stickers stuck in turn onto the applied and finished panels) is not a very practical solution because it presumes that the position of the chargers hidden in the finished wall is known.

In any case, this first solution would not allow the charging points to be found in the dark, in portions of wall that are poorly lit or filled with other images; moreover, it does not make it possible to indicate to the end user whether the charger is actually working, out of order or even simply not powered.

US 2010/219693 A1 discloses an inductive power providing systems suitable for wet environments. Water resistant inductive outlets include primary inductors incorporated into water resistant work-surfaces. Water resistant inductive power receivers include secondary inductors incorporated into water resistant casings. Secondary inductors are configured to couple with primary inductors thereby providing power to electrical loads connected thereto. This document discloses a plaster board with a ferromagnetic material and discloses a power outlet having a translucent covering layer and a visible light emitter.

WO 2015/153812 A1 discloses a method for interactive marking by a mobile robot on a vertical surface; the mobile robot includes a sensor and an actuated marker is displaced across a vertical surface. Features on, in or behind the vertical surface are detected with the sensor. Displacement of the mobile robot and actuation of the actuated marker is controlled in response to the detection of these features.

One of the purposes of the present invention is therefore to improve the covering panels described in document WO2018/025230A1 allowing an end user to find more easily the areas of a panel, of a room, of another space or structure covered by panels, in which wireless charging or in any case power transfer points are to be found.

### Summary of the invention

Such a purpose is accomplished, in a first aspect of the present invention, with a covering panel having the features according to claim **1.**

In a second aspect, the invention concerns a fastening system having the features according to claim 7.

In a third aspect of the invention, such a purpose is accomplished with a method having the features according to claim 9.

In a panel, according to a particular embodiment, the insert in which a nut screw (**68**) is formed is fitted or screwed into at least one or more structural layers (**52**, **53**, **56**) and/or through the ferromagnetic layer (**54**, **54'**).

In a panel, according to a particular embodiment, the light source (**62**) comprises a light emitting diode.

In a panel, according to a particular embodiment, the protective shield (**64**) forms a threaded pin and at least one end arranged at or close to the major front face (**5100**) of the panel (**51**) itself.

A notch is formed on such an end, said notch being arranged to engage with the tip of a screwdriver, for example flat-headed, cross-headed or hexagonal, allowing the protective shield (**64**) to be screwed in and unscrewed.

In a panel, according to a particular embodiment, the ferromagnetic layer (**54**) comprises a sheet of metal having an average or nominal thickness, equal to or greater than **0.1** millimetres, and preferably comprised between **0.2-1** millimetres.

In a particular embodiment of such a fastening system, the electrical or electronic device, or other electrical load devices **10**A to be fastened to one or more covering panels (**51**)**,** is provided with its own power supply unit (**205**) arranged to be powered by a wireless power supply station (**57**), inside the panel, for example of the inductive or capacitive type.

Further features of the invention are the object of the dependent claims.

The advantages that can be obtained with the present invention will become clearer, to those skilled in the art, from the following detailed description of some particular non-limiting embodiments, illustrated with reference to the following schematic figures.

## List of Figures

Figure **1** shows a perspective view of the major front face of a covering panel, according to a first embodiment of the present invention;

Figure **2** shows a cross section of the panel of Figure **1**;

Figure **3** shows a perspective view, partially in section, of the charger of the panel of Figure **1**;

Figure **4** shows a perspective view of the major rear face of the panel of Figure **1**;

Figure **5** shows an exploded perspective view of the major rear face of the panel of Figure **1**;

Figure **6** shows a perspective view of the major rear face of a covering panel, according to a second embodiment of the invention;

Figure **7** shows an exploded perspective view of the major rear face of the panel of Figure **6**;

Figure **8** shows a perspective view of the major front face of the panel of Figure **6**;

Figure **9** shows an exploded perspective view of the signal light of the panel of Figure **6**;

Figure **10** shows a perspective view of the front face of a first example of a fastening support adapted for fastening electrical or electronic devices to be powered, to a panel of Figure **1** or **6**;

Figure **11** shows a perspective view of the front face of the fastening support, with an example of anchoring through threaded holes, of Figure **10**;

Figure **12** shows an exploded perspective view of an electrical or electronic device, specifically a lamp, adapted for fastening to and receiving energy from the panel of Figure **1** or **6**.

## Detailed description

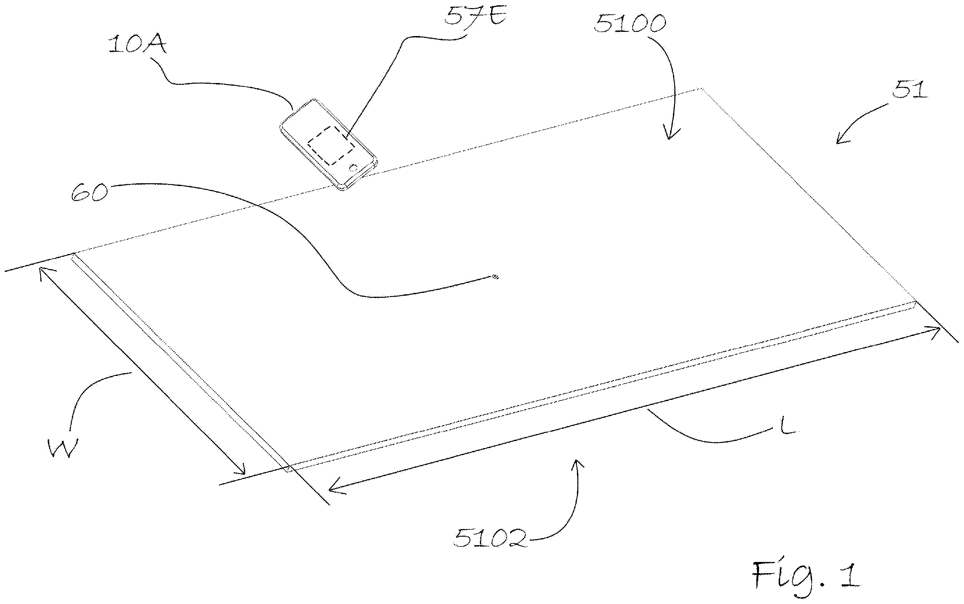

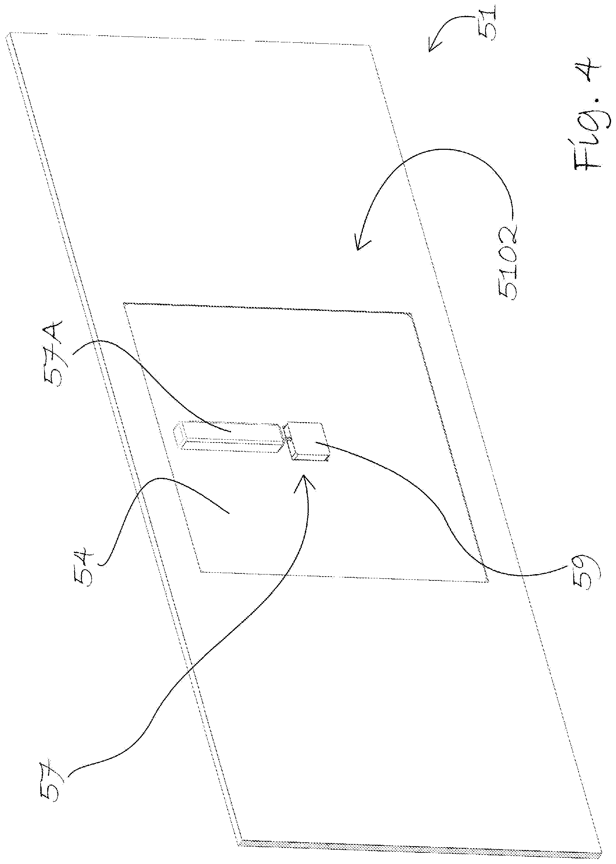

Figures **1**-**5** relate to a covering panel for buildings, according to a particular embodiment of the invention, indicated with reference numeral **51**.

The panel **51, 51'** can be used for example to cover masonry walls or ceilings of buildings, to construct walls, ceilings, false-ceilings, partitions with inner metallic frameworks, theatrical sets, display stands or display cases.

For example as shown in Figure **1**, the panel **51** can have the overall shape of a flat plate, even non-planar, for example rectangular or square.

Its outer surface forms a major front face **5100** and a major rear face **5102**.

The panel **51, 51'** comprises:

- a ferromagnetic layer **54** containing ferromagnetic material;
- one or more structural layers **52, 53, 56;**
- a signal light **60,** which is visible, at least when it is on, observing the major front face **5100** of the panel **51, 51'** from the outside.

The major front face **5100** is arranged to be oriented towards the observers and/or to face the room or other space the walls or ceilings of which are covered with or formed by one or more panels **51, 51'**.

The major rear face is arranged to be hidden from observers, possibly without facing the room or other space the walls or ceilings of which are covered with or formed by one or more panels **51, 51'**.

If the panel **51, 51'** covers the pre-existing masonry walls of a room, the major rear face thereof faces towards the masonry walls; if, on the other hand, the panel **51** is part of a partition with a metallic frame, the major rear face thereof faces towards the inside of the partition.

At least one first structural layer can be a layer made of wood, paper, card **52, 56** or other derivatives of wood or cellulose, ceramic materials, terracotta, glass, marble, granite or other stones, plastic materials like for example layers of sound-absorbing foam material, other porous sound-absorbing materials, like for example glass wool or rock wool panels.

In particular, at least one first structural layer can be made up of boards and blocks of solid wood, multi-layer wood or particle board.

At least one first structural layer can be made of composite materials like for example the following: a material comprising a polymeric matrix containing inorganic fillers in an amount equal to or greater than **30**% by weight, a polymeric matrix containing inorganic fillers in an amount equal to or less than **80**% by weight.

Such a polymeric matrix can for example be polymethylmethacrylate based.

Such inorganic fillers can for example be calcium carbonate, calcium sulphate, clay, silica, calcium silicate, alumina, carbon black, titanium dioxide, powdered metal or aluminium hydroxide trihydrate based.

Such fillers can comprise particles having average particle size comprised between **1** micron-**1** millimetre, and for example comprised between **5** micron-**0.5** millimetres or between **5**-**50** micron.

The abovementioned composite materials that form or are part of the first structural layer and/or of possible other structural layers can be for example of the type commercialised under the name CORIAN (R) or AVONITE (R) and/or described for example by one or more of the following patents: U.S. Reissue Patent N° 27093, US3488246, US3642975, US3847865, US4107135, US5286290, US5958539, US5998028, US6025069.

At least one first structural layer is made of such a material and has a thickness such that, if it was shaped like a flat plate, it would have a flexural rigidity Dflex preferably equal to or greater than about **15000** Nmm (Newton per millimetre), more preferably equal to or greater than **20000** Nmm, possibly equal to or greater than **150000** Nmm, possibly equal to or greater than **500000** Nmm, possibly equal to or greater than **2500000** Nmm.

Preferably at least the first structural layer has a flexural rigidity Dflex equal to or less than **3000000** Nmm and more preferably equal to or less than **2000000** Nmm.

The flexural rigidity Dflex is considered determined with the following formula of flat plates:

$$Dflex = [E*s^3]/[12*(1-\nu^2)]$$

where

E is Young's modulus, i.e. modulus of elasticity under traction of the material of the structural layer considered expressed in N/mm^2;
s is the thickness of the structural layer considered expressed in millimetres;
v is Poisson's ratio of the material of the structural layer considered.

At least one first structural layer is made of a material such that and has a thickness such that, if it was shaped like a flat plate, it would have a flexural rigidity Dflex preferably equal to or greater than that of a pine wood plate of at least **3** millimetres in thickness, more preferably equal to or greater than that of a pure aluminium or non-alloy steel plate C**40** of at least **3** millimetres in thickness, more preferably equal to or greater than that of a pure aluminium or non-alloy steel plate C**40** of at least **5** millimetres in thickness.

Preferably at least the first structural layer has a flexural rigidity Dflex equal to or less than **3000000** Nmm and more preferably equal to or less than **2000000** Nmm.

If based on paper, card or other derivatives of cellulose, the first structural layer has a thickness preferably equal to or greater than **0.1** millimetres, more preferably equal to or greater than **0.2** millimetres and possibly equal to or greater than **0.5** millimetres.

The panel **51, 51'** can also be provided with two or more structural layers, at least one of which can for example be a layer of gypsum or of gypsum-based material **53**, where in the present description, the term "material Y based on substance X" means a material having a content by weight at least equal to **50%** of substance X, where the percentage refers to the total weight of the material Y.

In particular, the panel **51, 51'** can comprise at least one cardboard-based first structural layer and another gypsum-based structural layer coupled with the first structural layer.

Advantageously, the various structural layers are glued, welded or otherwise fastened together on their major faces so as to be stiffer at least with regard to flexing.

Preferably, the panel **51, 51'** is made of one or more such materials and has a thickness such that, if it was shaped like a flat plate, it would have a total flexural rigidity Dflex - determined with the abovementioned formula for flat plates - preferably equal to or greater than about **15000** Nmm (Newton per millimetre), more preferably equal to or greater than **20000** Nmm, possibly equal to or greater than **150000** Nmm, possibly equal to or greater than **500000** Nmm, possibly equal to or greater than **2500000** Nmm.

Preferably the panel **51, 51'** has a total flexural rigidity Dflex equal to or less than **7000000** Nmm and more preferably equal to or less than **5000000** Nmm.

Preferably the panel **51, 51'** is made of one or more such materials and has a thickness such that, if it was shaped like a flat plate, it would have a total flexural rigidity Dflex preferably equal to or greater than that of a pine wood plate of at least **3** millimetres in thickness, more preferably equal to or greater than that of a pure aluminium or non-alloy steel plate C**40** at least **3** millimetres thick, more preferably equal to or greater than that of a pure aluminium or non-alloy steel plate C**40** at least **5** millimetres thick.

Each structural layer can for example be substantially continuous and devoid of holes or other through openings, or perforated or formed from a plurality of blocks or tiles separated from one another by voids.

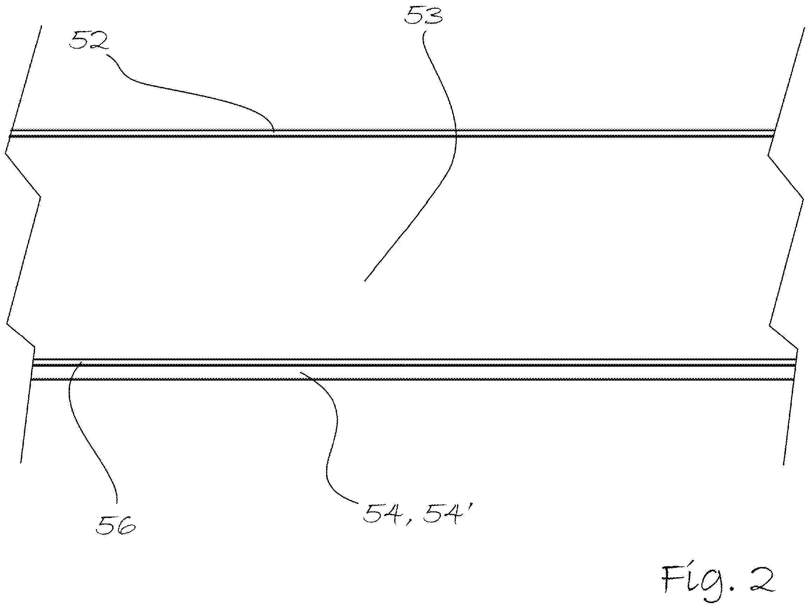

Like in the embodiment of Figure 2, the panel **51** can comprise, in order, starting from the major front face or from the rear front face, a first structural layer made of paper or cardboard **52,** a second structural layer **53** made of gypsum, a third structural layer **56** and a ferromagnetic layer **54**.

The latter forms one of the major faces **5100, 5102** of the panel **51**.

The ferromagnetic layer **54** can, for example, be glued or fastened through screws to the underlying structural layers **52, 53, 56**.

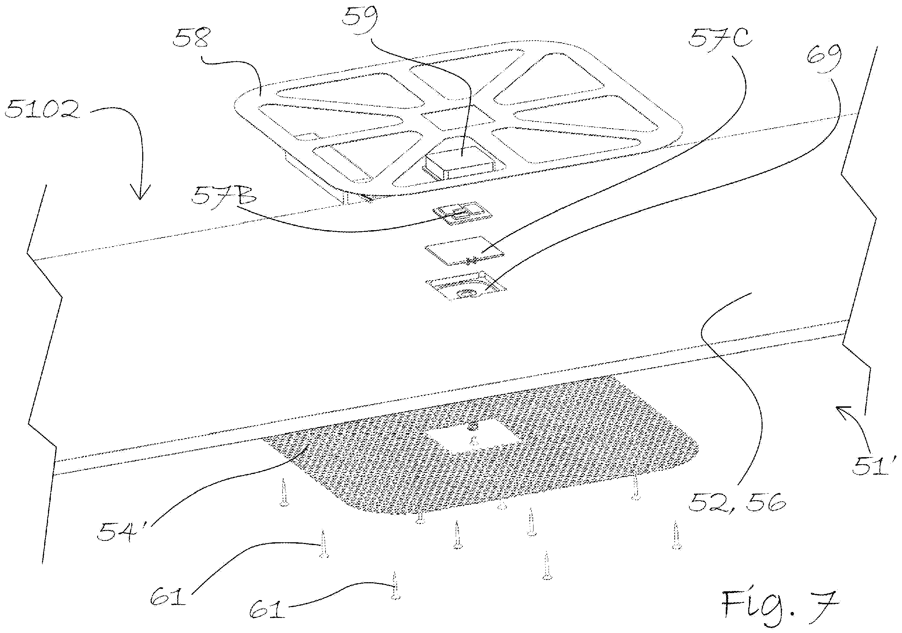

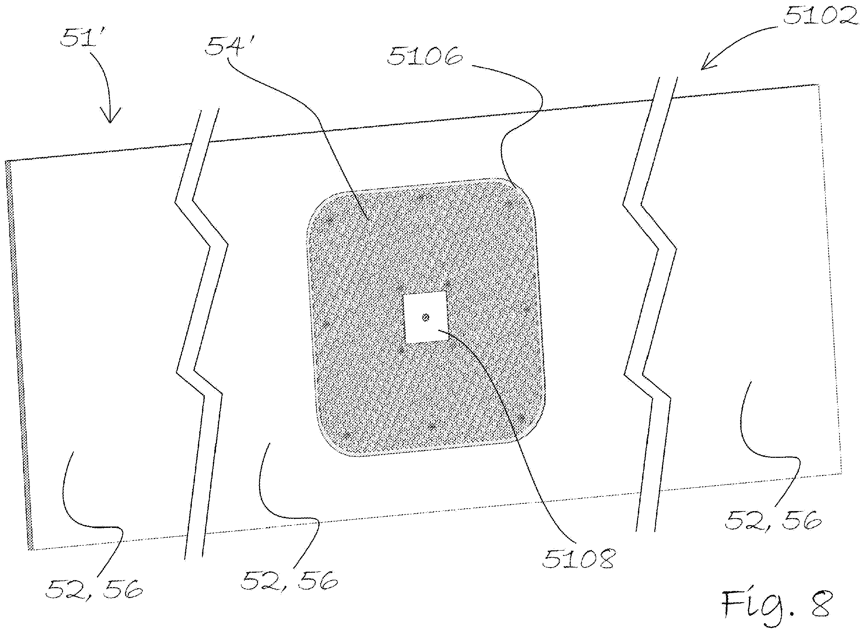

Advantageously, when it forms one of the outer major faces **5100, 5102** of the panel **51,** the ferromagnetic layer **54** is formed from or comprises a perforated metallic plate, for example grid-like, so as to more easily retain possible plasterwork (Figures **7, 8, 9**) or a plate, even solid, which already constitutes the major front face 5100, with aesthetic features.

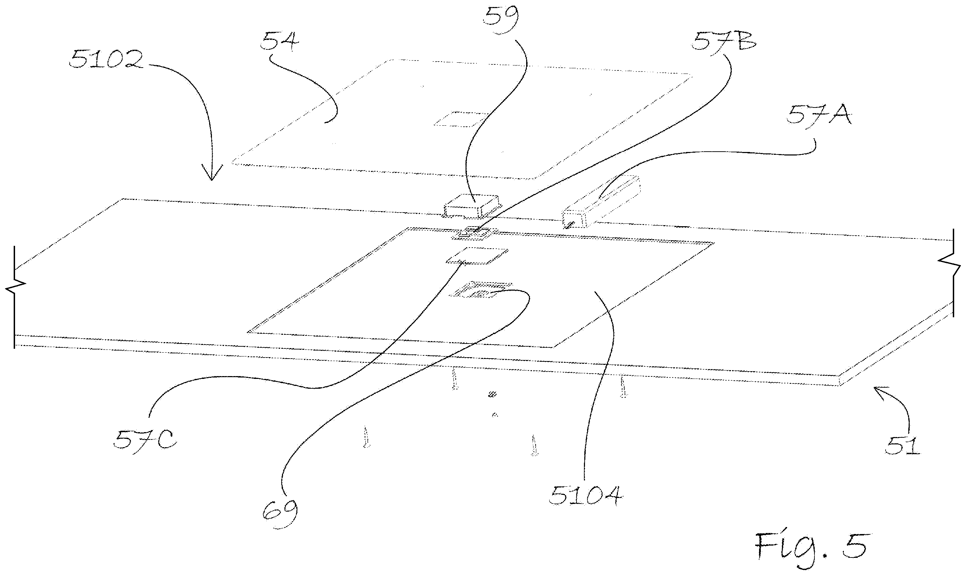

The ferromagnetic layer **54** preferably comprises a sheet of metallic plate that can extend over all or part (Figures **5, 7**-**9**) of the plan of the panel **51,** over all or part of the plan of a structural layer **52, 53, 56.**

Like in the embodiment of Figures 1, **3, 4, 5,** the ferromagnetic layer **54** can form part of the major rear face of the panel **51.**

In this case the ferromagnetic layer **54** can be advantageously inserted in a recess **5104** formed on the major rear face **5102** of the panel **51,** so that, for example, the layer **54** is flush with or at a lower level than the rest of the major rear face **5102** of the panel **51.**

In an embodiment that is not shown, the ferromagnetic layer **54** can form the entire major rear face of the panel **51.**

Preferably the ferromagnetic layer **54, 54'** can possibly be less rigid and/or resistant, at least to flexing, with respect to the first **52, 53, 56** and/or to the possible second structural layer **53,** and/or to the assembly of all of the structural layers coupled together.

Preferably, observing the major front face **5100** of the panel **51,** the signal light **60** comprises:

- a light source **62** arranged inside or behind the first structural layer **52, 53, 56** and/or the ferromagnetic layer **54;**
- a substantially transparent or translucent protective shield **64** that covers the light source **62** and allows the light emitted by such a light source **62** to be seen or glimpsed.

Advantageously, the light source comprises one or more light emitting diodes (LED).

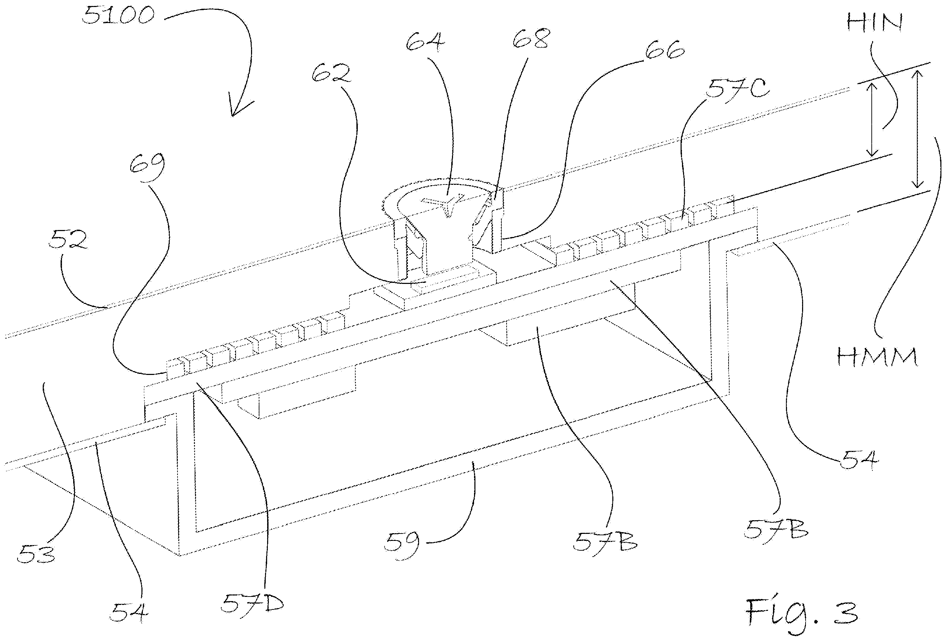

Like for example in the embodiment of Figure **3,** the protective shield **64** can extend at least partially through the first structural layer **52, 53, 56** closest to the major front face **5100** and/or through the ferromagnetic layer **54.**

The protective shield **64** can extend, for example, along a through hole or other through opening **66.**

In this case it crosses the panel **51,** either through its first structural layer **52, 53, 56** closest to the major front face **5100,** or, more preferably, through at least one gypsum-based second structural layer **53.**

Like for example in the embodiment of Figure **3,** the protective shield **64** can comprise, for example, a pin, smooth or threaded, or other more or less oblong insert force-fitted or screwed at least into the first structural layer **52, 53, 56** closest to the major front face **5100** and/or through the ferromagnetic layer **54,** and more preferably also at least into a second structural layer **53** based on gypsum.

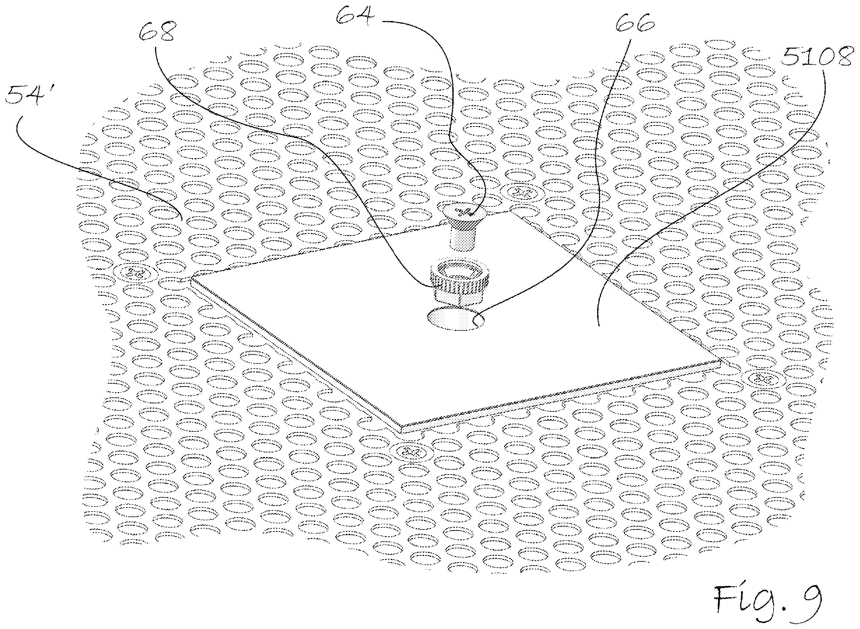

For this purpose, like in the embodiments of Figures **3, 9,** the panel **51** can comprise an insert with nut screw **68** force-fitted at least into the first structural layer **52, 53, 56** closest to the major front face **5100** and into a possible second structural layer **53** based on gypsum.

The threaded pin, which forms the protective shield **64,** can be screwed more or less deeply into the nut screw **68.**

The insert with nut screw **68** can be for example a square, hexagonal, polygonal or star-shaped nut; or a bush, substantially cylindrical on the outer sides of which there is a ribbing or a plurality of crests and grooves that are substantially parallel, longitudinal to the axis of the internal threading of the insert **68** itself.

In other embodiments that are not shown, the threaded pin that forms the protective shield **64** can be screwed directly into the wood, cardboard or other material derived from wood or cellulose that forms the first structural layer **52, 53, 56** closest to the major front face **5100.**

Like in the embodiments of Figures **3, 9,** the cross sections of the end of the protective shield **64,** which face the outside of the panel **51,** can have a diameter, a length or a width for example comprised between **0.3-3** centimetres, more preferably comprised between **0.5-2** centimetres and even more preferably comprised between **0.5-1** centimetre.

As shown for example in Figure **3,** advantageously the light source **62** is arranged to emit light towards an end of the protective shield **64,** this end being such as to allow a sufficient fraction of light to pass inside the protective shield **64** making it come out from the other end of the shield **64** closer to or outside of the major front face **5100** of the panel **51.**

In this way, the light emitted by the light source **62** can be seen outside of the panel **51.**

When the light source **62** is switched on, the surface of the shield **64** has a luminosity preferably comprised between **0.3-80** lux.

Preferably, the sheet of plate that forms the ferromagnetic layer **54** has an average thickness equal to or greater than **0.1** millimetres, more preferably equal to or greater than **0.2** millimetres, more preferably equal to or greater than **0.4** millimetres, more preferably equal to or greater than **0.6** millimetres and possibly comprised between **0.5**-**2** millimetres or between **0.2**-**1** millimetres.

This is to create a magnetic force that is strong enough to fasten to the wall and also support a sufficient variety of electrical load devices **10**A like, for example, home appliances and other commonly used electrical or electronic devices having, for example, a weight equal to or less than **20** kg or equal to or less than **30** kg, **40** kg or **60** kg.

In particular, the force of magnetic attraction must preferably prevent the magnetically fastened objects from sliding along the panel itself, even if it is vertical.

Advantageously, the ferromagnetic layer **54** is arranged at an average depth HMM from the major face equal to or less than **13** millimetres, more preferably equal to or less than **10** millimetres and even more preferably equal to or less than **6** millimetres.

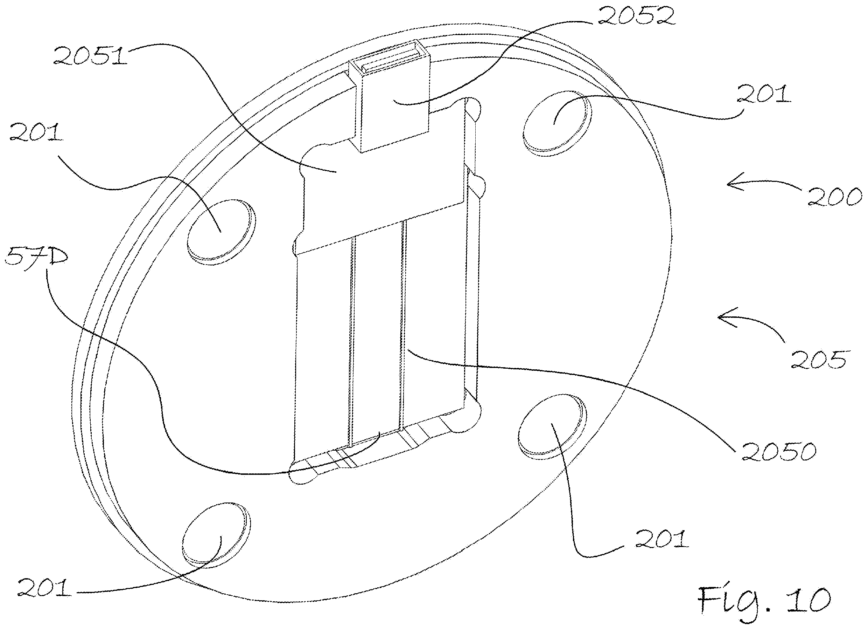

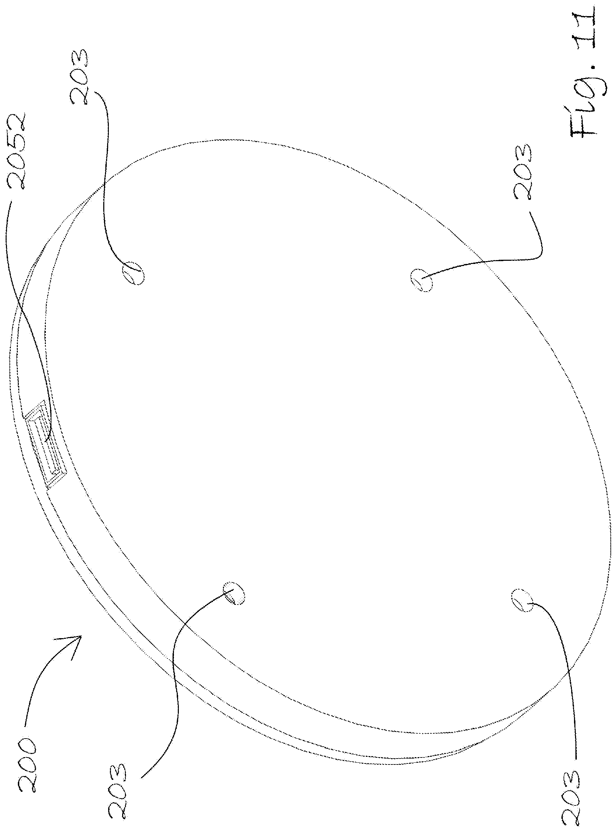

This allows the ferromagnetic layer **54** to be brought sufficiently close to the magnets of devices or other objects to be fastened to the panel **51** such as, for example, the magnets **201** of the fastening support **200** (Figure **10, 11**) in order to fasten such objects with sufficient force.

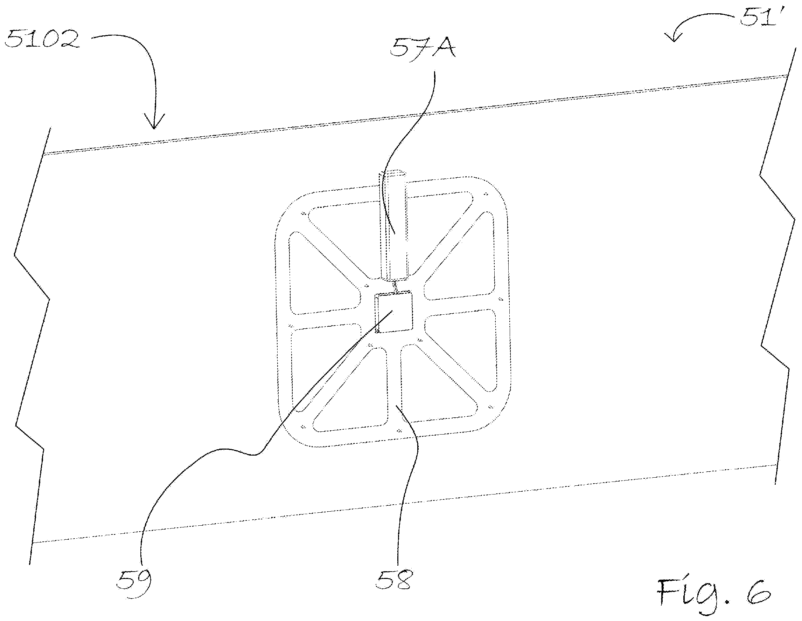

Like in the embodiment of Figures **6-9**, the ferromagnetic layer **54'** can form part of the major front face **5100** of the panel **51'**, reducing to the minimum the distance between ferromagnetic layer **54'** and permanent magnets **201** of the electrical load devices **10**A fastened to it. This maximises the magnetic attraction and fastening force of the devices **10**A and makes it possible to use less powerful magnets, thus less of a risk in causing accidents.

In this case the ferromagnetic layer **54'** can be advantageously inserted in a recess **5106** formed on the major front face **5100** of the panel **51'**, for example, so that the layer **54'** is flush with the rest of the major front face **5106** of the panel **51'** or more internal with respect to the major front face **5100,** to facilitate the subsequent plastering of the plate even further.

Preferably the ferromagnetic layer **54'** substantially does not overlap the inductor **57**C but, as for example shown in Figures **5, 7, 8, 9,** it can be substantially adjacent to it.

For this purpose the recess **5106** is advantageously ring-shaped (Figures **7, 8, 9**) and, close to its centre, forms a projection from the top that is preferably flat **5108,** i.e. preferably at the same level as the major front face **5100** that, like a centrer, allows the central opening of the ferromagnetic layer **54'** to be positioned with precision with respect to the inductor **57**C.

Advantageously, the panel **51'** is provided with a plate or other reinforcing structure **58** fastened to at least one part or preferably to all of the structural layers **52, 53, 56** of the panel **51',** for example through screws or nails **61** (Figure **7**).

Advantageously, the reinforcing layer **58** is also fastened to the ferromagnetic layer **54'** located on the other major front face **5100** of the panel **51',** for example through screws or nails **61** (Figure **7**).

The reinforcing structure **58** reduces the risk of the ferromagnetic layer **54'** to detach from the rest of the panel **51'** if overloaded, for example because a television set or other relatively heavy home appliance has been fastened there.

Moreover, the reinforcing structure **58** helps the plastering operations, to hide the panel **54'** and even out the surface of the major front face **5100** of the panel **51',** making the panel **54'** stay stuck to the recess **5106**.

In an embodiment that is not shown, the ferromagnetic layer **54'** can form the entire major front face of the panel **51.**

Advantageously, the panel **51** is provided with one or more wireless power supply stations **57** (Figures **3-7**).

The term wireless power supply, in the present description, is meant to indicate the transfer of electrical energy from an electrical power supply unit to an electrical load without using conducting cables and with an efficiency, deemed to be the ratio between the electrical power received by the electrical load and that transmitted by the power supply unit, equal to or greater than **30%,** more preferably equal to or greater than **40%,** more preferably equal to or greater than **70%** and even more preferably equal to or greater than **90%.**

Each wireless power supply station **57** comprises:

- a power supply unit **57**A arranged, for example, to transform the alternating current of the public electricity mains into direct current or into alternating current of different frequency to that of the public electricity mains;
- an inductor arranged to transfer energy to an electrical load device **10**A to be powered; the inductor, in the present description, will also be indicated as primary inductor assembly **57**C;
- preferably, an electronic card **57**B powered by the power supply unit **57**A and which, in turn, powers the primary inductor assembly **57**C.

The term electrical load device **10**A in the present description is meant to indicate an electrical or electronic device that must be powered or charged.

In order to be powered with a wireless power supply system, an electrical load device **10**A is also provided with its own inductor arranged to receive the electrical energy transmitted by the primary inductor assembly **57**C.

The inductor of the electrical load device **10**A is also indicated, in the present description, as secondary inductor assembly **57**E.

Like in the embodiments shown, the primary inductor assemblies **57**C are preferably arranged so as not to rotate or move with respect to the respective secondary inductor assemblies **57**E while they power the latter.

Like for example in the embodiment of Figures **3, 5, 6** the electronic card **57**B can be enclosed in and protected by a box or shell **59** located on the major rear face **5102,** possibly projecting through a suitable opening formed in the ferromagnetic layer **54, 58** and/or in the structural layers **52, 53, 56.**

The electronic card **57**B or other electronic card of the panel **51** can comprise an antenna that, through NFC technology or other technologies, makes it possible to identify - through control interfaces (for example a smartphone app)- one panel **51** among many or more specifically one power supply station **57** among others.

The power supply unit **57**A can comprise, for example, a low or ultra-low voltage transformer, which can be fastened, for example, with biadhesive tape or screwed to a major face **5100, 5102** of the panel **51, 54, 58.**

The possible electronic card **57**B can be arranged for example to control the current in the inductor **57**C, to actuate the QI protocol or other protocols for wireless power transfer and/or to transmit and receive signals wirelessly for example through WiFi, ZigBee, Bluetooth, NFC protocol.

Such a wireless data transceiver - for example WiFi, ZigBee, Bluetooth - makes it possible to activate, deactivate and more generally remotely control the various functions, for example the power supply unit **57** and the light **62,** for example through a remote computer, mobile telephone or smartphone; in the last case a suitable control app can be loaded onto the smartphone.

As shown for example in Figure **3,** the primary inductor assembly **57**C can comprise a winding comprising one or more electrical conductors wound so as to form one or more coils, substantially flat, preferably fastened on a sheet of ferrite **57**D.

For this purpose the inductor **57**C is preferably arranged at an average depth HIN from the surface of the major front face **5100,** preferably equal to or less than **25** millimetres, more preferably equal to or less than **12** millimetres, more preferably equal to or less than **2** millimetres and even more preferably equal to or less than **1** millimetre (Figure **3**), so as to bring it sufficiently close to the user device to be powered.

Again for this purpose, a corresponding recess **69** having average or maximum depth equal to HIN is advantageously formed on the major rear face **5102** of the panel **51.**

The recess **69** can, for example, be made through milling of one or more structural layers **52,53,56.**

Advantageously, the LED, or other light source **62** is fastened onto the ferrite **57**D or onto the electronic card **57**B and is preferably arranged at or close to the centre of the primary inductor assembly **57**C (Figure **3**), so as to allow a user to easily and successfully find the position of the wireless power supply station and, more specifically, the position of the primary inductor assembly **57**C, even though it is hidden in the panel **51** and invisible from the outside.

Advantageously the signal light **60** is arranged at or close to one of the wireless power supply stations **57,** for example at or close to its possible inductor **57**C or capacitive plate so as to allow a user to easily find the position of the power supply station **57** even though it is hidden in or behind the covering panel **51, 51'.**

The term "arranged at or close to one of the wireless power supply stations **57**" is meant to indicate that the signal light **60** is in a position such that by placing the electrical load device **10**A over it the power supply station **57** manages to charge it with an efficiency equal to or greater than **30**%.

Advantageously, the panel **51** has a length L comprised between **1-2** metres and, for example, equal to about **1.2** metres (Figure **1**).

The panel **51** can have a length L and/or a width W comprised for example between **0.5-4** metres, between **0.5-3** metres, between **0.5-2** metres or between **0.4-1.5** metres.

Advantageously, the panel **51** has a width W comprised between **1-2** metres, more preferably comprised between **0.4-0.8** metres and even more preferably roughly equal to **0.5** metres.

These dimensions make it possible to produce on an industrial scale prefabricated panels **51** provided with signal light **62** and wireless charger **57** that are particularly easy to handle, easy to set up and adapt to other panels of the most commonly used formats, as well as being cost-effective.

A possible example of use and of operation of the panel **51** will now be described.

The installer of plasterboard walls or ceiling or the electrician can purchase the panels **51** for example already complete with the wireless power supply stations **57** and in particular with the signal light **60.**

Once the power supply unit **57**A has been connected to the external electricity mains, or the electronic card **57**B has been connected to the power supply unit **57**A, or the electronic card **57**B has been directly connected to the home or local network, in the case in which it is already at the correct direct voltage, the installer or electrician mounts the panels on a suitable support structure, such as a pre-existing masonry wall or ceiling or a support frame, of the *per se* known type.

The panel or panels **51** are then plastered, adjusting the protective shield **64** with a screwdriver so as to keep it flush with the finished surface of the visible major face **5100.**

Depending on the different desired aesthetic effects, it is possible to cover the outer end of the protective shield **64** with a light layer of plaster or leave it without plaster, allowing the possible adjustment, removal and replacement thereof.

In turn, paintwork may or may not be applied to the outer end of the protective shield **64.**

The panel **51** thus constitutes a modular component that can easily be industrialised and suitable for mass production to make coverings of buildings or construction of new parts.

The LED or other light source **62** can, advantageously, be always switched on and visible from inside the room, or other space covered by panels **51,** through the protective shield **64** so that the end users always and easily can find the position of the wireless power supply station and, more specifically, of the primary inductor assembly **57**C, even if it is hidden in or behind the panels **51.**

Moreover, if it is switched off it can signal for example that the wireless power supply station **57** lacks a power supply.

The LED or other light source **62** can emit a fixed or variously intermittent light, and moreover it can emit a light of a single colour, for example white, or of many colours, for example red, green and blue, if the LED or other light source **62** is of the RGB type, so as to transmit more information to the observer.

Such information can communicate, for example, not only whether the power supply unit **57** is switched on, off or out of order, but can distinguish between the out of order condition and the lack of power supply upstream, or can signal whether the WiFi emitter or other wireless data transmitter, possibly incorporated in the electronic card **57**B or more generally in the panel, is switched on, off, inactive or in transmission phase.

Arranging the outermost end of the shield **64** flush with the outer surface of the major front face **5100** is particularly advantageous because thus the visibility of the light source **62** is maximum and at the same time, not projecting from the surface of the panel **51,** it allows the devices, which will be magnetically fastened there, to adhere with the maximum possible surface to the ferromagnetic layer **54.**

More in particular the panels **51** described earlier can be advantageously used to make for example the lighting system object of international patent application WO2018/025230A1 and comprising at least one lighting device advantageously equipped with means necessary for the autonomous or manual movement thereof on a support surface.

Figures **10, 11** show a first example of fastening support **200** through which an electrical load device **10**A, like for example a television, radio, recorder, video recorder, stereo speaker system, projector, mobile telephone and landline telephone, smartphone, computer, thermostat, intercom, clock, pressure gauge, hygrometer, closed circuit video camera screen, microphone, switch, sensor for alarm and other systems, siren, wi-fi repeater, acoustic signal or other alarms, doorbell, loudspeaker, spotlight, lamps or other lighting bodies for lighting a room or other spaces, warning light or other luminous indicator, transceiver apparatuses, other home appliances or other electrical and/or electronic devices, can be fastened magnetically to walls or ceilings covered by the panels **51, 51',** even though such electrical load devices **10**A do not have their own permanent magnets **201.**

The abovementioned lighting bodies, in order to light a room or other spaces, emit a total light flow preferably equal to or greater than **30** lumens, more preferably equal to or greater than **40** lumens and possibly equal to or greater than **60** lumens, **100** lumens, **200** lumens, **400** lumens, **800** lumens and possibly even equal to or greater than **1500, 2300, 3000** lumens.

More generally, the ferromagnetic property of the panel can be exploited to easily fasten and remove decorative and light diffusion elements (coloured diffusors, etc.), as well as to fasten other decorative and nondecorative elements such as paintings, towel bars, key holders, shelves, object holders of various kinds.

For this purpose, the fastening support, indicated with reference numeral **200,** is provided with:

- one or more magnets **201** arranged, for example, close to or at the corners of the support **200** if it has, for example, an overall polygonal shape;
- a fastening system **203** arranged to fasten the home appliance or other electrical load device **10**A to the support **200**;
- a power supply unit **205** that advantageously is a wireless power supply unit, for example of the inductive or capacitive type.

Like in the embodiment of Figures **10, 11,** the fastening system **203** can comprise one or more threaded holes in which to screw screws that fasten the home appliance or other electrical load device **10**A.

Alternatively, the fastening system **203** can comprise threaded pins, snap clips or other mechanical locking systems.

The power supply unit **205** is advantageously provided with:

- a reel or coil winding **2050** that forms one of the abovementioned secondary inductor assemblies **57**E,
- an electronic control circuit **2051** arranged, for example, to actuate the QI protocol or other wireless power transfer protocols and to transfer the suitable voltage/current to the electrical load device.

The power supply unit **205,** or more generally the winding **2050,** can also be provided with a layer of ferrite **57**D to shield the electromagnetic emissions emitted by the same windings of the primary and secondary inductor assemblies **57**C, **57**E.

The power supply unit **205** can, through a mechanical socket or mechanical current plug **2052,** power various electrical or electronic devices or other electrical load devices **10**A.

The power supply unit **205** is in turn powered by the primary inductor assembly **57**C and thus constitutes a possible example embodiment of the abovementioned secondary inductor assembly **57**E.

The fastening support **200** can be fastened to a panel **51** by simply bringing them close together so that the attraction between the magnets **201** and the ferromagnetic layer **54, 54'** of the panel makes them stick together, locking them in a mutually fixed position.

The fastening support **200** makes it possible to reversibly fasten electrical, electronic and other types of devices to vertical walls or to ceilings through the fastening systems **203,** choosing and changing the position thereof with extreme freedom.

Preferably, the magnets **201** and/or the wireless power supply unit can be arranged inside the possible casing or shell of the electrical load device **10**A or be permanently fixed to such a casing or shell.

The fastening support **200** is not indeed necessary, for example if the home appliances or other electrical load devices **10**A to be fastened to the panels **51, 51'** are already provided with their own magnets **201** and possibly with their own wireless power supply unit, for example of the inductive type, arranged to be powered by the wireless power supply unit **57** of one of the panels **51, 51'**.

As depicted in Figure **1**, the electrical load device **10**A can preferably be a smartphone and, even more preferably, an Iphone **8** currently commercialised by the firm Apple (California) and already equipped with a secondary inductor assembly **57**E adapted for cooperating with the panel **51, 51'** and more specifically with a wireless power supply station **57.**

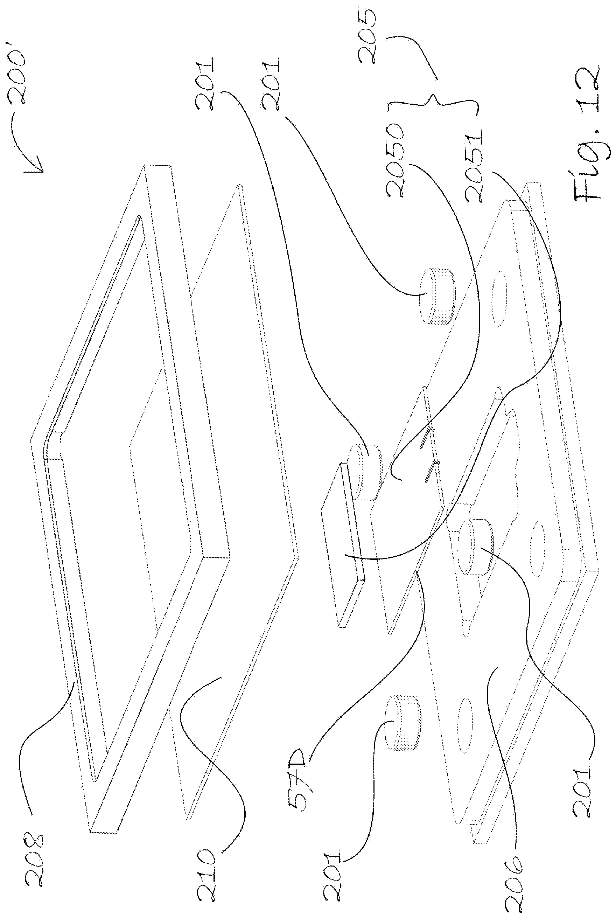

Figure **12** shows an example of electrical load **10**A powered by a panel **51, 51'** described earlier, specifically a lamp or spotlight.

The lamp **200'** can comprise a main body **206,** to which the permanent magnets **201** are fixed, and a fastening framework **208,** fixed to the main body **206** so as to form a space in which the light source **210,** in this specific case an OLED (Organic Light Emitting Diodes) panel can be inserted, to be powered.

Advantageously, the lamp **200'** comprises a wireless power supply unit **205,** as described earlier, in turn comprising the reel or coil winding **2050** and the electronic control circuit **2051.**

A particularly advantageous use of the panels **51, 51',** described earlier, is to use them to cover pre-existing walls or ceilings, for example made of masonry, or to make new walls and ceilings in a building, by arranging a certain number of panels **51, 51'** each provided with at least one wireless power supply unit **57** at various points of a room, like for example a dwelling, an office or another space.

By doing so, the finished room, covered with the panels, can have an unblemished and basic appearance, free from visible sockets, wires or cable glands. The room is, however, provided with multiple charging points, hidden for example behind the panels **51, 51',** which cover the walls, and which allow a user to install home appliances and electrical and electronic devices, in general of greatly varying types, in the room, in the most varied positions with extreme freedom.

A room thus covered and provided with multiple hidden charging points manages to adapt with extreme flexibility to the changing requirements of residents, or other users, over time, very often without any need to modify the cabling of the room and even less so to have specialised workers carry out other work.

Consider, for example, the different electrical or electronic devices to be installed or moved in a room of a growing child, or if the room is converted to an office and vice-versa, or the installation of a new device such as a security camera, an additional sensor of an anti-burglar system or a new gadget.

Consider, moreover, the advantage given by the installation of a panel **51, 51'** close to a shower or bath. It would be the only safe solution, avoiding the risk of electrocution given by a standard socket, completely safely installing users **200, 200'** or more general a load device **10**A with IP **66** or higher characteristics.

A dwelling, provided with multiple hidden wireless power supply units, meets the current market trend of offering increasing numbers of electrical and electronic devices connected to the Internet, or other global, local or regional digital network, and arranged to communicate wirelessly, for example through WiFi, Bluetooth or Zigbee technology, is thus configured to receive a large amount of such devices with extreme freedom.

The example embodiments described earlier can undergo different modifications and variations, without departing from the scope of protection of the present invention.

For example, the wireless power supply station **57** can also be of the capacitive and not only inductive type.

The ferromagnetic layer **54, 54'** can be not only a simple ferrous alloy or a suitable steel, but also a permanently magnetized material; in this case the magnets **201** of the fastening support **200** or of the electrical load device **10**A can be replaced by simple blocks, plates or other inserts of ferromagnetic material that is not permanently magnetized.

Advantageously, the LED or other light source **62** can be fastened, not only to the centre of the primary inductor assembly **57**C, but also in other more peripheral areas thereof, or even not on the winding, but close to it, so as to still allow a user to easily and unmistakably find the position of the primary inductor assembly **57**C, even though it is hidden in the panel **51** and invisible from the outside. The panels **51, 51'** can have an overall shape that is not only substantially flat, but also shells with single or double curvature, like for example portions of cylindrical surfaces or caps.

Any reference in this description to "an embodiment", "an example" means that a particular feature or structure described in relation to such an embodiment is included in at least one embodiment of the invention and in particular in a particular variant of the invention as defined in a main claim.

The fact that such expressions appear in various passages of the description does not mean that they necessarily only refer to the same embodiment.

Moreover, when a feature, element or structure is described in relation to a particular embodiment, it should be observed that it is within the capability of the average person skilled in the art to apply such a feature, element or structure to other embodiments.

Reference numerals that differ only due to different superscripts, e.g. **21', 21", 21**[III] unless otherwise specified indicate different variants of an element called the same way.

Moreover, all of the details can be replaced by technically equivalent elements.

For example, the materials used, as well as the dimensions, can be whatever according to the technical requirements.

It should be understood that an expression of the type "A *comprises* B, C, D" or "A *is formed from* B, C, D" also comprises and describes the particular case in which "A *consists of* B, C, D".

The expression *"A comprises an element B"* unless otherwise specified should be interpreted as "*A comprises one or more elements B"*.

The examples and lists of possible variants of the present application should be understood as non-exhaustive lists.

**Claims**

1. Covering panel (**51**, **51'**) for buildings, the outer surface of which forms a major front face (**5100**) and a major rear face (**5102**), and this panel (**51**, **51'**) comprises:

   - a ferromagnetic layer (**54**, **54'**) containing ferromagnetic material;
   - one or more structural layers (**52**, **53**, **56**) made of one or more materials which are substantially non-ferromagnetic;
   - a signal light (**60**), which is visible, at least when it is on, observing the major front face (**5100**) of the covering panel (**51**, **51'**) from the outside;
   - one or more wireless power supply stations (**57**), each of which is arranged for supplying electrical power to one or more electrical or electronic devices, wherein the signal light (**60**) is arranged at or close to one of the wireless power supply stations (**57**), for example at or close to its possible inductor (**57**C) or capacitive plate, to allow a user to easily find the position of the power supply station (**57**), even though it is hidden in or behind the covering panel (**51**, **51'**), wherein
   - the signal light (**60**) is arranged inside or behind at least one of the structural layers (**52**, **53**, **56**) and/or the ferromagnetic layer (**54**, **54'**), and comprises a light source (**62**) arranged inside or behind the first structural layer (**52**, **53**, **56**) and/or the ferromagnetic layer (**54**);
   - said covering panel (**51**, **51'**) comprises a substantially transparent or translucent protective shield (**64**) that covers the light source (**62**) and allows the emitted light from outside of the same panel (**51**, **51'**) to be seen or glimpsed;
   - the protective shield (**64**) extends, at least partially, across at least one of the one or more structural layers (**52**, **53**, **56**) and/or across the ferromagnetic layer (**54**, **54'**);
   - the protective shield (**64**) comprises a pin or other insert fitted with interference or screwed into at least one of the one or more structural layers (**52**, **53**, **56**) and/or through the ferromagnetic layer (**54**, **54'**).

2. Panel, according to claim **1,** wherein the protective shield (**64**) engages with the ferromagnetic layer (**54**, **54'**) and/or with at least one of the one or more structural layers (**52**, **53**, **56**) inserting, at least partially, into an opening (**66**) made in at least one of the one or more structural layers (**52**, **53**, **56**) and/or in the ferromagnetic layer (**54**, **54'**).

3. Panel, according to claim **1**, comprising an insert in which a nut screw (**68**) is formed, in which the pin forming the protective shield (**64**) is screwed.

4. Covering panel (**51**, **51'**), according to one or more of the previous claims, wherein at least one of the one or more structural layers (**52**, **53**, **56**) is made of a gypsum and/or cardboard material.

5. Covering panel (**51**, **51'**), according to one or more of the previous claims, wherein at least one of the one or more structural layers (**52**, **53**, **56**) is made of a wood material, or another material derived from wood or cellulose, for example, solid wood, multi-layer wood or particle board, and/or is made of ceramic, glass, terracotta, plastic materials including, for example, layers of sound-absorbing foam material, non-plastic porous sound-absorbing materials, for example, glass wool or rock wool panels.

6. Covering panel (**51**, **51'**), according to one or more of the previous claims, wherein at least one of said wireless power supply stations (**57**) comprises one or more primary inductor assemblies (**57**C) each of which comprises a winding arranged for wireless transmission of electrical energy to an electrical or electronic device to be powered mainly through electromagnetic induction.

7. Fastening system for electrical or electronic equipment (**10**A) comprising:

   C.**10.1**) one or more covering panels (**51**, **51'**) with the features according to one or more of claims **1**-**6**;
   C.**10.2**) an electrical or electronic device (**10**A), or another device, in turn provided with one or more magnets (**201**) and/or ferromagnetic inserts arranged for being fastened, through magnetic attraction, to one or more of the covering panels (**51**, **51'**), also when these are arranged substantially vertically and/or suspended under a ceiling.

8. Fastening system, according to claim **7,** comprising a fastening support arranged for being fastened to the electrical, electronic device, and in turn comprising one or more magnets (**201**) and/or ferromagnetic inserts arranged for being fastened, through magnetic attraction, to one or more of the covering panels (**51**, **51**'), also when the latter are arranged substantially vertically and/or suspended under a ceiling.

9. Method for fastening electrical or electronic equipment (**10**A), comprising the following steps:

   S.**14.1**) providing a wall or a ceiling formed or covered by one or more covering panels (**51**, **51**') with the features according to one or more of claims **1**-**6**;
   S.**14.2**) fastening an electrical or electronic device (**10**A) comprising one or more magnets (**201**) and/or ferromagnetic inserts arranged for being fastened, through magnetic attraction, to one or more of the covering panels (**51**, **51**') according to one or more of claims **1**-**6** and/or to one or more of the covering panels (**51**, **51**') of a system having the features according to claim **7 or 8,** also when these covering panels (**51**, **51**') are arranged substantially vertically and/or suspended under a ceiling, to one of said covering panels (**51**, **51**') through magnetic attraction between the magnets (**201**) and the ferromagnetic layer (**54**, **54**') of the panel (**51**, **51**').

10. Method for fastening and supplying power to electrical and electronic equipment (**10**A) according to claim **9,** wherein the one or more covering panels (**51**, **51**') have the features according to claim **1-6,** the electrical or electronic device (**10**A) is equipped with its own secondary inductor (**57**E) arranged for receiving the electrical energy transmitted by a primary inductor assembly (**57**C) of a wireless power supply station (**57**) of a covering panel with the features according to one or more of claims **1** to **6,** or another wireless power supply system, and arranged for supplying power to the rest of the electrical or electronic device (**10**A), and comprising the step of said secondary inductor (**57**E) receiving electrical energy from the primary inductor assembly (**57**C) of the one or more covering panels (**51**, **51**') through a wireless power transmission system.

## Patentansprüche

1. Verkleidungsplatte (**51**, **51**') für Gebäude, deren Außenfläche eine Hauptvorderseite (**5100**) und eine Hauptrückseite (**5102**) bildet, und diese Platte (**51**, **51**') umfasst:

   - eine ferromagnetische Schicht (**54**, **54**'), die ferromagnetisches Material enthält;
   - eine oder mehrere Strukturschichten (**52**, **53**, **56**), die aus einem oder mehreren Materialien bestehen, die im Wesentlichen nicht ferromagnetisch sind;
   - ein Signallicht (**60**), das zumindest im eingeschalteten Zustand sichtbar ist, wenn die Hauptvorderseite (**5100**) der Verkleidungsplatte (**51**, **51**') von außen betrachtet wird;
   - eine oder mehrere drahtlose Stromversorgungsstationen (**57**), von denen jede zur Versorgung eines oder mehrerer elektrischer oder elektronischer Vorrichtungen mit elektrischem Strom angeordnet ist, wobei das Signallicht (**60**) an oder nahe einer der drahtlosen Stromversorgungsstationen (**57**) angeordnet ist, beispielsweise an oder nahe ihrem möglichen Induktor (**57**C) oder kapazitiven Platte, um es einem Benutzer zu ermöglichen, die Position der Stromversorgungsstation (**57**) leicht zu finden, obwohl sie in der Verkleidungsplatte (**51**, **51**') verborgen oder hinter ihr ist,
   wobei
   - das Signallicht (**60**) innerhalb oder hinter mindestens einer der Strukturschichten (**52**, **53**, **56**) und/oder der ferromagnetischen Schicht (**54**, **54**') angeordnet ist und eine Lichtquelle (**62**) umfasst, die innerhalb oder hinter der ersten Strukturschicht (**52**, **53**, **56**) und/oder der ferromagnetischen Schicht (**54**) angeordnet ist;
   - die Verkleidungsplatte (**51**, **51**') einen im Wesentlichen transparenten oder durchscheinenden Schutzschild (**64**) umfasst, der die Lichtquelle (**62**) abdeckt und es ermöglicht, dass das von außerhalb derselben Platte (**51**, **51**') emittierte Licht gesehen oder erblickt wird;
   - der Schutzschild (**64**) sich zumindest teilweise über mindestens eine der einen oder mehreren Strukturschichten (**52**, **53**, **56**) und/oder über die ferromagnetische Schicht (**54**, **54**') erstreckt;
   - der Schutzschild (**64**) einen Stift oder einen anderen Einsatz umfasst, der mit Interferenz in mindestens eine der einen oder mehreren Strukturschichten (**52**, **53**, **56**) und/oder durch die ferromagnetische Schicht (**54**, **54**') eingepasst oder eingeschraubt ist.

2. Platte nach Anspruch **1,** wobei der Schutzschild (**64**) mit der ferromagnetischen Schicht (**54**, **54**') und/oder mit mindestens einer der einen oder mehreren Strukturschichten (**52**, **53**, **56**) in Eingriff steht, indem er zumindest teilweise in eine Öffnung (**66**) eingesetzt ist, die in mindestens einer der einen oder mehreren Strukturschichten (**52**, **53**, **56**) und/oder in der ferromagnetischen Schicht (**54**, **54**') ausgebildet ist.

3. Platte nach Anspruch **1,** umfassend einen Einsatz, in dem eine Mutterschraube (**68**) ausgebildet ist, in die der Stift, der den Schutzschild (**64**) ausbildet, eingeschraubt ist.

4. Verkleidungsplatte (**51**, **51**') nach einem oder mehreren der vorhergehenden Ansprüche, wobei mindestens eine der einen oder mehreren Strukturschichten (**52**, **53**, **56**) aus einem Gips- und/oder Kartonmaterial besteht.

5. Verkleidungsplatte (**51**, **51**') nach einem oder mehreren der vorhergehenden Ansprüche, wobei mindestens eine der einen oder mehreren Strukturschichten (**52**, **53**, **56**) aus einem Holzmaterial oder einem anderen Material besteht, das von Holz oder Zellulose abgeleitet ist, zum Beispiel Massivholz, Mehrschichtholz oder Spanplatte, und/oder aus Keramik, Glas, Terrakotta, Kunststoffmaterialien besteht, einschließend zum Beispiel Schichten aus schallabsorbierendem Schaummaterial, nicht plastischen porösen schallabsorbierenden Materialien, zum Beispiel Glaswolle oder Steinwolleplatten.

6. Verkleidungsplatte (**51**, **51**') nach einem oder mehreren der vorhergehenden Ansprüche, wobei mindestens eine der drahtlosen Stromversorgungsstationen (**57**) eine oder mehrere Primärinduktoranordnungen (**57**C) umfasst, von denen jede eine Wicklung umfasst, die zur drahtlosen Übertragung elektrischer Energie an eine elektrische oder elektronische Vorrichtung angeordnet ist, die hauptsächlich durch elektromagnetische Induktion angetrieben werden soll.

7. Befestigungssystem für elektrische oder elektronische Geräte (**10**A), umfassend:

C.**10.1**) eine oder mehrere Verkleidungsplatten (**51**, **51**') mit den Merkmalen nach einem oder mehreren der Ansprüche **1-6**;
C.**10.2**) eine elektrische oder elektronische Vorrichtung (**10**A) oder eine andere Vorrichtung, die wiederum mit einem oder mehreren Magneten (**201**) und/oder ferromagnetischen Einsätzen versehen ist, die angeordnet sind, um durch magnetische Anziehung an einer oder mehreren der Verkleidungsplatten (**51**, **51**') befestigt zu werden, auch wenn diese im Wesentlichen vertikal angeordnet und/oder unter einer Decke aufgehängt sind.

8. Befestigungssystem nach Anspruch **7**, umfassend einen Befestigungsträger, der angeordnet ist, um an der elektrischen, elektronischen Vorrichtung befestigt zu werden, und wiederum umfassend einen oder mehrere Magnete (**201**) und/oder ferromagnetische Einsätze, die angeordnet sind, um durch magnetische Anziehung an einer oder mehreren der Verkleidungsplatten (**51**, **51**') befestigt zu werden, auch wenn die letzteren im Wesentlichen vertikal angeordnet und/oder unter einer Decke aufgehängt sind.

9. Verfahren zum Befestigen von elektrischen oder elektronischen Geräten (**10**A), umfassend die folgenden Schritte:

S.**14.1**), Bereitstellen einer Wand oder einer Decke, die durch eine oder mehrere Verkleidungsplatten (**51**, **51**') mit den Merkmalen nach einem oder mehreren der Ansprüche **1-6** ausgebildet oder abgedeckt ist;
S.**14.2**) Befestigen einer elektrischen oder elektronischen Vorrichtung (**10**A), umfassend einen oder mehrere Magnete (**201**) und/oder ferromagnetische Einsätze, die angeordnet sind, um durch magnetische Anziehung an einer oder mehreren der Verkleidungsplatten (**51**, **51**') nach einem oder mehreren der Ansprüche **1-6** und/oder an einer oder mehreren der Verkleidungsplatten (**51**, **51**') eines Systems mit den Merkmalen nach Anspruch **7 oder 8,** auch wenn diese Verkleidungsplatten (**51**, **51**') im Wesentlichen vertikal angeordnet und/oder unter einer Decke aufgehängt sind, an einer der Verkleidungsplatten (**51**, **51**') durch magnetische Anziehung zwischen den Magneten (**201**) und der ferromagnetischen Schicht (**54**, **54**') der Platte (**51**, **51**') befestigt zu werden.

10. Verfahren zum Befestigen und Versorgen von elektrischen und elektronischen Geräten mit Strom (**10**A) nach Anspruch **9**, wobei die eine oder mehreren Verkleidungsplatten (**51**, **51**') die Merkmale nach Anspruch **1-6** aufweisen, die elektrische oder elektronische Vorrichtung (**10**A) mit einem eigenen Sekundärinduktor (**57**E) ausgestattet ist, angeordnet zum Empfangen der elektrischen Energie, die von einer Primärinduktoranordnung (**57**C) einer drahtlosen Stromversorgungsstation (**57**) einer Verkleidungsplatte mit den Merkmalen nach einem oder mehreren der Ansprüche **1 bis 6** oder eines anderen drahtlosen Stromversorgungssystems übertragen wird und angeordnet zum Versorgen des Rests der elektrischen oder elektronischen Vorrichtung (**10**A) mit Strom, und umfassend den Schritt, dass der Sekundärinduktor (**57**E) elektrische Energie von der Primärinduktoranordnung (**57**C) der einen oder mehreren Verkleidungsplatten (**51**, **51**') über eine drahtlose Stromübertragungssystem empfängt.

**Revendications**

1. Panneau de revêtement (**51**, **51**') pour bâtiments, dont la surface extérieure forme une face avant principale (**5100**) et une face arrière principale (**5102**), et ce panneau (**51**, **51**') comprend:

- une couche ferromagnétique (**54**, **54**') contenant un matériau ferromagnétique;
- une ou plusieurs couches structurelles (**52**, **53**, **56**) constituées d'un ou de plusieurs matériaux sensiblement non ferromagnétiques;
- un signal lumineux (**60**), qui est visible, au moins lorsqu'il est allumé, en observant de l'extérieur la face avant principale (**5100**) du panneau de revêtement (**51**, **51**');

- une ou plusieurs stations d'alimentation électrique sans fil (**57**), chacune d'entre elles étant conçue pour alimenter en électricité un ou plusieurs dispositifs électriques ou électroniques, le signal lumineux (**60**) étant disposé à proximité de l'une des stations d'alimentation électrique sans fil (**57**), par exemple à proximité de son inducteur éventuel (**57C**) ou de sa plaque capacitive, afin de permettre à un utilisateur de trouver facilement la position de la station d'alimentation électrique (**57**), même si elle est cachée dans ou derrière le panneau de revêtement (**51**, **51**'),

où

- le signal lumineux (**60**) est disposé à l'intérieur ou derrière au moins une des couches structurelles (**52**, **53**, **56**) et/ou la couche ferromagnétique (**54**, **54**'), et comprend une source lumineuse (**62**) disposée à l'intérieur ou derrière la première couche structurelle (**52**, **53**, **56**) et/ou la couche ferromagnétique (**54**);

- ledit panneau de revêtement (**51**, **51**') comprend un écran de protection sensiblement transparent ou translucide (**64**) qui recouvre la source lumineuse (**62**) et permet de voir ou d'apercevoir la lumière émise à l'extérieur du même panneau (**51**, **51**');

- l'écran de protection (**64**) s'étend, au moins partiellement, sur au moins une des couches structurelles (**52**, **53**, **56**) et/ou sur la couche ferromagnétique (**54**, **54**');

- l'écran de protection (**64**) comprend une broche ou un autre insert fixé par interférence ou vissé dans au moins une des couches structurelles (**52**, **53**, **56**) et/ou à travers la couche ferromagnétique (**54**, **54**').

2. Panneau selon la revendication **1**, dans lequel l'écran de protection (**64**) s'engage dans la couche ferromagnétique (**54**,**54**') et/ou dans au moins une des couches structurelles (**52**, **53**,**56**) en s'insérant, au moins partiellement, dans une ouverture (**66**) pratiquée dans au moins une des couches structurelles (**52**, **53**,**56**) et/ou dans la couche ferromagnétique (**54**, **54**').

3. Panneau, selon la revendication **1**, comprenant un insert dans lequel est formée une vis à écrou (**68**) dans laquelle est vissée la broche formant l'écran de protection (**64**).

4. Panneau de revêtement (**51**, **51**'), selon une ou plusieurs des revendications précédentes, dans lequel au moins une des couches structurelles (**52**, **53**, **56**) est constituée d'un matériau en gypse et/ou en carton.

5. Panneau de revêtement (**51**, **51**'), selon une ou plusieurs des revendications précédentes, dans lequel au moins une des couches structurelles (**52**, **53**, **56**) est constituée d'un matériau en bois ou d'un autre matériau dérivé du bois ou de la cellulose, par exemple du bois massif, du bois multicouche ou des panneaux de particules, et/ou est constituée de céramique, de verre, de terre cuite, de matériaux plastiques comprenant, par exemple, des couches de mousse insonorisante, des matériaux insonorisants poreux non plastiques, par exemple des panneaux de laine de verre ou de laine de roche.

6. Panneau de revêtement (**51**, **51**'), selon une ou plusieurs des revendications précédentes, dans lequel au moins une desdites stations d'alimentation électrique sans fil (**57**) comprend un ou plusieurs ensembles inducteurs primaires (**57C**) dont chacun comprend un enroulement disposé pour la transmission sans fil de l'énergie électrique à un dispositif électrique ou électronique à alimenter principalement par induction électromagnétique.

7. Système de fixation pour équipement électrique ou électronique (**10A**) comprenant:

C.**10.1**) un ou plusieurs panneaux de revêtement (**51**, **51**') présentant les caractéristiques selon une ou plusieurs des revendications **1-6**;
C.**10.2**) un dispositif électrique ou électronique (**10A**), ou un autre dispositif, pourvu à son tour d'un ou plusieurs aimants (**201**) et/ou d'inserts ferromagnétiques disposés pour être fixés, par attraction magnétique, à un ou plusieurs des panneaux de revêtement (**51**, **51**'), même lorsque ceux-ci sont disposés sensiblement à la verticale et/ou suspendus sous un plafond.

8. Système de fixation, selon la revendication **7**, comprenant un support de fixation disposé pour être fixé au dispositif électrique, électronique, et comprenant à son tour un ou plusieurs aimants (**201**) et/ou des inserts ferromagnétiques disposés pour être fixés, par attraction magnétique, à un ou plusieurs des panneaux de revêtement (**51**, **51**'), même lorsque ces derniers sont disposés sensiblement verticalement et/ou suspendus sous un plafond.

9. Procédé de fixation d'équipements électriques ou électroniques (**10A**), comprenant les étapes suivantes:

S.**14.1**) fournir un mur ou un plafond formé ou recouvert par un ou plusieurs panneaux de revêtement (**51**, **51**') présentant les caractéristiques selon une ou plusieurs des revendications **1-6;**

S.**14.2**) fixer un dispositif électrique ou électronique (**10**A) comprenant un ou plusieurs aimants (**201**) et/ou inserts ferromagnétiques disposés pour être fixés, par attraction magnétique, à un ou plusieurs des panneaux de revêtement (**51**, **51**') selon une ou plusieurs des revendications **1-6** et/ou à un ou plusieurs des panneaux de revêtement (**51**, **51**') d'un système présentant les caractéristiques selon la revendication **7 ou 8,** même lorsque ces panneaux de revêtement (**51**, **51**') sont disposés sensiblement verticalement et/ou suspendus sous un plafond, à l'un de ces panneaux de revêtement (**51**, **51**') par attraction magnétique entre les aimants (**201**) et la couche ferromagnétique (**54**, **54**') du panneau (**51**, **51**').

**10.** Procédé de fixation et d'alimentation d'équipements électriques et électroniques (**10**A) selon la revendication **9**, dans lequel le ou les panneaux de revêtement (**51**, **51**') présentent les caractéristiques selon la revendication **1-6**, le dispositif électrique ou électronique (**10**A) est équipé de son propre inducteur secondaire (**57**E) disposé pour recevoir l'énergie électrique transmise par un ensemble inducteur primaire (**57**C) d'une station d'alimentation électrique sans fil (**57**) d'un panneau de revêtement présentant les caractéristiques selon l'une ou plusieurs des revendications **1 à 6,** ou un autre système d'alimentation électrique sans fil, et disposé pour alimenter le reste du dispositif électrique ou électronique (**10**A), et comprenant l'étape selon laquelle ledit inducteur secondaire (**57**E) reçoit de l'énergie électrique de l'ensemble inducteur primaire (**57**C) d'un ou de plusieurs panneaux de revêtement (**51**, **51**') à travers un système de transmission d'énergie sans fil.

Fig. 1

Fig. 2

Fig. 3

5100

HIN

HMM

62 64 68 66 57C

69 52 57C

53

54 57D

59 57B 57B 54

EP 3 833 828 B1

EP 3 833 828 B1

57

54

57A

5102

59

51

Fig. 4

Fig. 5

EP 3 833 828 B1

5102

57A

51'

59

58

Fig. 6

Fig. 7

EP 3 833 828 B1

Fig. 8

Fig. 9

Fig. 10

EP 3 833 828 B1

FIG. 11

Fig. 12

EP 3 833 828 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025230 A1
- US 2010219693 A1
- WO 2015153812 A1
- US 27093 A
- US 3488246 A
- US 3642975 A
- US 3847865 A
- US 4107135 A
- US 5286290 A
- US 5958539 A
- US 5998028 A
- US 6025069 A